# EUROPEAN PATENT APPLICATION

(11) **EP 4 306 556 A1**
(43) Date of publication of application: **17.01.2024**
(21) Application number: 22306047.6
(22) Date of filing: 12.07.2022
(51) Int. Cl.: C08F 126/04, C08F 226/04, H01M 8/00

(54) **PROTIC IONIC LIQUID BASED ON DIALLYL AMMONIUM CATION AND RELATED MEMBRANE**

(71) Applicant: Toyota Jidosha Kabushiki Kaisha, Aichi-Ken 471-8571 (JP); Basque Center for Macromolecular Design and Engineering, POLYMAT Fundazioa, 20018 San Sebastian (ES); Universidad Del Pais Vasco Euskal Herriko Unibertsitatea, 48940 Leioa (Vizcaya) (ES)
(72) Inventor: GUEGUEN, Aurelie, 1140 BRUSSELS (BE); MECERREYES, David, 48940 LEIOA (VIZCAYA) (ES); GALLASTEGUI, Antonela, 20018 San Sebastian (ES)
(74) Representative: Cabinet Beau de Loménie

(57) **Abstract**

The present invention relates to a protic ionic liquid or a protic poly(ionic liquid) based on diallyl ammonium cation, as well as a polymerized ionic liquid membrane made from such protic ionic liquid or such protic poly(ionic liquid), and to its use in fuel cells. The invention also aims at a method for preparing such a protic poly(ionic liquid). Also, the invention concerns a fuel cell comprising a polymerized ionic liquid membrane according to the invention. Lastly, the invention is directed to a vehicle, an electronic device, or a stationary power generating device, and more particularly a car, bike, scooter or drone, comprising a fuel cell according to the invention.

## Description

### Field of the invention

The present invention relates to a protic ionic liquid and a protic poly(ionic liquid) based on diallyl ammonium cation, as well as a polymerized ionic liquid membrane such as a proton-exchange membrane made from such protic ionic liquid or protic poly(ionic liquid), and to its use in fuel cells. The invention also aims at a method for preparing such a protic poly(ionic liquid). Also, the invention concerns a fuel cell comprising a polymerized ionic liquid membrane according to the invention. Lastly, the invention is directed to a vehicle, an electronic device, or a stationary power generating device, and more particularly a car, bike, scooter or drone, comprising a fuel cell according to the invention.

### Background to the invention

Proton-exchange membranes (PEMs) have been widely applied in clean energy technologies, and in particular in electrochemical energy conversion devices with high energy conversion efficiency and zero emission such as fuel cells and redox flow batteries. Fuel cells have the advantage of converting chemical energy directly into electrical energy with high efficiency and low emission of pollutants.

At present, the majority of PEMs are based on perfluorosulfonic acid polymer (PFSA) such as Nafion^{®}, a sulfonated tetrafluoroethylene based fluoropolymer-copolymer, which exhibits high proton conductivity, mechanical strength, thermal stability, chemical stability, and durability in the hydrated state below 100 °C. However, Nafion^{®} suffers from reduced proton conductivity due to dehydration at higher temperatures, which limits its application at high temperatures where the water could evaporate. In addition, Nafion^{®} has a high manufacturing cost because of its perfluorinated chemistry.

For these reasons, alternative solutions to Nafion^{®} have been sought in the past few years, such as those based on hydrocarbon polymer chemistry, in particular polybenzimidazole (PBI) incorporating protic ionic liquids (PILs).

For example, DE 10 2006 054 951 A1 discloses poly(ionic liquid) comprising polymers or copolymers derived from allyl or vinyl monomers and containing ammonium and/or sulfonium cations such as PBI, and its use in PEMs for fuel cells. However, the presence of the ring on the side chain instead of on the polymer backbone leads to poor mechanical performance of the materials.

EP 3 097 141 B1 also describes the use of a blend membrane based on PBI and PILs based on poly(diallyl dimethyl ammonium) trifluoromethane sulphonate P[PDADMA][TFMS] as polyelectrolyte membrane material for High Temperature Proton-Exchange Membrane Fuel Cell (HT-PEMFC) with enhanced proton and hydroxyl ion conductivity. However, mixing PILs with PBI complicates the method of preparing these membranes and makes it more expensive. In addition, the presence of two -CH₃ groups attached to the N cation makes conductivity more difficult.

### Summary of the invention

In the context of the invention, it is desirable to provide new protic ionic liquids that can be used in proton-exchange membranes (PEMs) which overcome the disadvantages of the membranes of the prior art. Indeed, traditional membranes such as Nafion^{®} membranes are not self-standing polymeric membranes thermally stable at high temperatures with sufficient performance in terms of ionic conductivity at elevated temperatures. The present invention aims to solve the above-mentioned problems.

In particular, the present invention seeks to provide a protic ionic liquid and a protic poly(ionic liquid) based on diallyl ammonium cation, as well as a polymerized ionic liquid membrane made from such protic ionic liquid or such protic ionic liquid polymer with higher performance than conventional PEMs based on Nafion^{®} in terms of ionic conductivity at dry conditions or high temperatures. The polymerized ionic liquid membrane of the invention achieves high proton conductivity, thermal, mechanical and chemical stability, and low cost at high temperatures. In fact, the membranes of the invention are capable of operating in fuel cells at elevated temperature above 90 °C. Thus, increasing the operating temperatures of fuel cells has the advantage of accelerating the kinetic reaction of the oxygen reduction reaction at the cathode side, decreasing the sensitivity of the catalyst in the fuel cell and the catalyst layer to impurities, which allows the radiator size required to cool the fuel cell to be reduced.

### Brief description of the Figures

**Figure 1** illustrates the synthesis of protic ionic liquids (PILs) based on DAMAH⁺HSO₄⁻ and TAAH⁺MSA⁻.
**Figure 2** illustrates the thermal polymerization process for a protic ionic liquid according to the invention.
**Figure 3** shows the thermal degradation (determined by TGA) of the protic ionic liquids (PILs) prepared in the examples.
**Figure 4** shows the thermal degradation (determined by TGA) of MSA⁻and HSO₄⁻ thermally polymerized PILs.
**Figure 5** shows the thermal degradation (determined by TGA) of the DAMAH⁺Tf⁻, DAMAH⁺MSA⁻ and DAMAH⁺MSA₅₀⁻TF₅₀⁻ UV polymerized PILS in presence of 5 wt% of TAAH⁺MSA⁻ crosslinker.
**Figure 6** shows the ionic conductivity of the protic ionic liquids (PILs) prepared in the examples.
**Figure 7** shows the ionic conductivity of thermally polymerized DAMAH⁺MSA⁻ and DAMAH⁺HSO₄⁻ protic ionic liquids (PILs).
**Figure 8** shows the ionic conductivity of PILS polymers crosslinked with TAA.
**Figure 9** shows the ionic conductivity of PILs polymers crosslinked with TAAH⁺MSA⁻.

### Detailed description of the invention

According to a first aspect, the present invention relates to a protic ionic liquid comprising:
(a) a cationic monomer unit represented by formula (1): 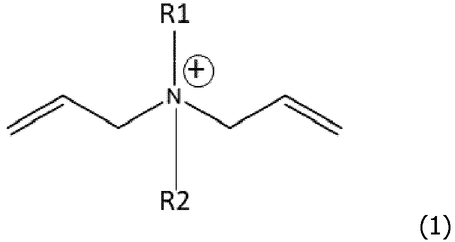 wherein:
   N⁺ is a nitrogen atom constituting a quaternary ammonium cation,
   R¹ is a hydrogen atom,
   R² is a (C1-C20)akyl or a (C4-C20)aryl group, optionally substituted, and
(b) an anion.

According to a second aspect, the invention relates to a protic poly(ionic liquid) comprising:
(a') a polymer derived from cationic monomer units of formula (1) and represented by repeating units of formula (2): 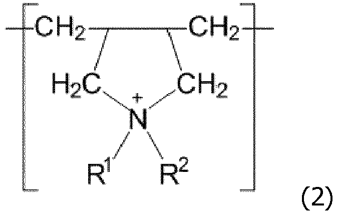 wherein:
   N⁺ is a nitrogen atom constituting a quaternary ammonium cation,
   R¹ is a hydrogen atom,
   R² is a (C1-C20)akyl or a (C4-C20)aryl group, optionally substituted, and
(b') anions.

In the sense of the invention, the term "alkyl" means a saturated, linear or branched, C1-C20, preferably C1-C12, more preferably C1-C6, and even more preferably C1-C4, hydrocarbon-based aliphatic group. The term "branched" means that at least one lower alkyl group such as methyl or ethyl is carried by a linear alkyl chain. As the alkyl group, there may be mentioned, for example, methyl, ethyl, n-propyl, i-propyl, n-butyl, t-butyl, i-butyl, s-butyl and n-pentyl.

In the sense of the invention, the term "aryl" means any functional group or substituent derived from at least one aromatic ring; an aromatic ring corresponds to any planar mono- or polycyclic group comprising a delocalized π-system in which each atom of the cycle comprises a p-orbital, said p-orbital overlapping each other; among such aryl groups there may be mentioned phenyl, biphenyl, naphthalene and anthracene groups. The aryl groups of the invention comprise from 4 to 20 carbon atoms, even preferably from 4 to 12 carbon atoms, and even more preferably from 5 to 6 carbon atoms.

In the cationic monomer unit (a) of formula (1) or polymer (a') represented by repeating units of formula (2), R² is a (C1-C20)akyl or a (C4-C20)aryl group that can be substituted by a (C1-C6) alkyl substituent optionally comprising a heteroatom such as an oxygen, a nitrogen or a sulphur atom; a (C2-C6) alkenyl substituent optionally comprising a heteroatom such as an oxygen, a nitrogen or a sulphur atom; a halogen atom; a -OH group; a -COOH group. (C1-C6) alkyl substituents optionally comprising a heteroatom such as an oxygen, a nitrogen or a sulphur atom are preferred substituents.

According to a preferred embodiment, in the cationic monomer unit (a) of formula (1) or polymer (a') represented by repeating units of formula (2), R² is a methyl, ethyl, propyl, or butyl group. According to an even more preferred embodiment, the cationic monomer unit (a) or polymer (a') derive from diallylmethylamine (DAMA) monomers wherein R² is preferably a methyl group.

Preferred anions (b) or (b') are selected from the group consisting of HSO₄⁻, Cl⁻, MSA⁻, Tf, TFSI⁻, and mixtures thereof, and more preferably MSA⁻, Tf , TFSI⁻, and mixtures thereof.

Thus, the present invention also relates to a method for preparing a protic poly(ionic liquid) according to the invention comprising the steps of:
(i) reacting a diallyl (C1-C20)alkyl amine or a diallyl (C4-C20)aryl amine, and preferably diallylmethylamine (DAMA), with at least one acid, and
(ii) polymerizing the liquid obtained in step (i), either via thermal polymerization, or via UV-polymerization in presence of a crosslinker.

In a preferred embodiment, the acid of step (i) is selected from the group consisting of phosphoric acid (H₃PO₄), sulfuric acid (H₂SO₄), hydrochloric acid (HCI), hydroxymethanesulfonic acid (HMSA), triflate acid (HTf), bis(trifluoromethanesulfonyl)imide acid (HTFSI), trifluoroacetic acid, propanoic acid, phosphoric acid, phosphorous acid, sulfuric acid, hydrochloric acid, nitric acid, acetic acid, benzoic acid, salicylic acid, sulfamic acid, benzenesulfonic acid, perfluorobenzenesulfonic acid, fluorobenzenesulfonic acid, trifluorobenzenesulfonic acid, perfluoroctanesulfonic acid, perfluorobutanesulfonic acid, 4-toluenesulfonic acid, 3-nitrobenzenesulfonic acid, 4-aminobenzenesulfonic acid, 2-sulfobenzoic acid, 5-sulfosalicylic acid, 2,4,6-trinitrobenzenesulfonic acid, and mixtures thereof. In a more preferred embodiment, the acid of step (i) is selected from phosphoric acid (H₃PO₄), sulfuric acid (H₂SO₄), hydrochloric acid (HCI), hydroxymethanesulfonic acid (HMSA), triflate acid (HTf), bis(trifluoromethanesulfonyl)imide acid (HTFSI), and mixtures thereof. According to a particularly preferred embodiment, the acid of step (i) is selected from hydroxymethanesulfonic acid (HMSA), triflate acid (HTf), bis(trifluoromethanesulfonyl)imide acid (HTFSI), and mixtures thereof. The acid of step (i) may be a mixture of at least two different acids.

In a first embodiment, the polymerizing step (ii) can be carried out via thermal polymerization. Advantageously, the polymerizing step (ii) is carried out via thermal polymerization in presence of an initiator.

In this embodiment, preferred initiators are selected from the group consisting of butyl 4,4-di(tert-butylperoxy)valerate, tert-butylperoxybenzoate, 2,2-di(tert-butylperoxy)butane, tert-amyl peroxybenzoate, tert-butylperoxyacetate, tert-butylperoxy-(2-ethylhexyl)carbonate, tert-butylperoxy isopropyl carbonate, tert-butyl peroxy-3,5,5-trimethyl-hexanoate, 1,1-di(tert-butylperoxy)cyclo-hexane, tert-amyl peroxyacetate, tert-amylperoxy-(2-ethylhexyl)carbonate, 1,1-di(tert-butylperoxy)-3,5,5-trimethylcyclohexane, 1,1-di(tert-amylperoxy)cyclohexane, tert-butyl-monoperoxymaleate, tert-butyl peroxyisobutyrate, tert-butyl peroxydiethylacetate, tert-butyl peroxy-2-ethylhexanoate, dibenzoyl peroxide, tert-amyl peroxy-2-ethylhexanoate, di(4-methylbenzoyl)peroxide, 1,1,3,3,-tetramethylbutyl peroxy-2-ethylhexanoate, ammonium peroxodisulfate, 2,5-dimethyl-2,5-di(2-ethylhexanoylperoxy)hexane, didecanoyl peroxide, dilauroyl peroxide, di(3,5,5-trimethylhexanoyl) peroxide, tert-amyl peroxypivalate, tert-butylperoxyheptanoate, 1,1,3,3-tetramethylbutyl peroxypivalate, tert-butyl peroxypivalate, dicetyl peroxydicarbonate, dimyristyl peroxydicarbonate, di(2-ethylhexyl) peroxydicarbonate, diisopropyl peroxydicarbonate, tert-butyl peroxyneodecanoate, di-sec-butyl peroxydicarbonate, tert-amyl peroxyneodecaniate, cumyl peroxyneoheptanoate, di(3-methoxybutyl) peroxydicarbonate, 1,1,3,3-tetramethylbutyl peroxyneodecanoate, cumyl peroxyneodecanoate, diisobutyryl peroxide, 2,2'-azobis(isobutyramidine) hydrochloride (AIBA), N,N'-azobisisobutyronitrile (AIBN), 2,2'-azobisisoheptonitrile (ABVN), 2,2'-azobis-2-methylbutyronitrile (AMBN), 1,1'-azobis(cyclohexane-1-carbonitrile) (ACCN), 1-[(cyano-1-methylethyl)azo]formamide (CABN), dimethyl 2,2'-azobis(2-methylpropionate) (AIBME), 2,2'-azobis[2-(2-imidazolin-2-yl)propane] dihydrochloride (AIBI), 1,1-azobis(hexahydrobenzonitrile), 2,2'-azobis(isobutyronitrile), and mixtures thereof.

In a particularly preferred embodiment, the initiator is an azo initiator, advantageously selected from the group consisting of 2,2'-azobis(2-methylpropionamide)dihydrochloride (AIBA), N,N'-azobisisobutyronitrile (AIBN), 2,2'-azobisisoheptonitrile (ABVN), 2,2'-azobis-2-methylbutyronitrile (AMBN), 1,1'-azobis(cyclohexane-1-carbonitrile) (ACCN), 1-[(cyano-1-methylethyl)azo]formamide (CABN), dimethyl 2,2'-azobis(2-methylpropionate) (AIBME), 2,2'-azobis[2-(2-imidazolin-2-yl)propane] dihydrochloride (AIBI), 1,1-azobis(hexahydrobenzonitrile), 2,2'-azobis(isobutyronitrile), and mixtures thereof.

According to this embodiment, the polymerizing step (ii) can advantageously be carried out at a temperature ranging from 20 to 140 °C, and more advantageously from 40 to 100 °C. The polymerizing step (ii) at this temperature can take for 8 to 36 hours, advantageously from 12 to 30 hours, and more advantageously 24 hours.

In a second embodiment, the polymerizing step (ii) can be carried out via UV-polymerization in presence of a crosslinker.

According to this embodiment, the polymerizing step (ii) is carried out by exposure to UV light. Advantageously, the exposure to UV is carried out at an intensity ranging from 100 to 700 mW.cm⁻², preferably from 200 to 600 mW.cm⁻², and more preferably from 300 to 500 mW.cm⁻². The exposure to UV can be carried out in less than 5 minutes, preferably from 10 seconds to 3 minutes, and more preferably from 30 seconds to 2 minutes. The polymerizing step (ii) is more advantageously carried out by UV irradiation using a Dymax UVC-5 Light-Curing Conveyor System (DYMAX^{®}).

In this embodiment, the crosslinker is advantageously selected from the group consisting of ethylene glycol dimethacrylate, ethylene glycol acrylate, poly(ethylene glycol) di(meth)acrylate, divinylbenzene, 1,3-diisopropenyl benzene, N,O-bismethacryloyl ethanolamine, N,N-1,4-phenylenediacrylamide, 3,5-bis(acrylamido)benzoic acid, trimethylpropane trimethacrylate, pentaerythritol triacrylate, N,N-methylenediacrylamide, 2,6-bisacryloylamidopyperidine, 1,4-diacryloyl piperazine, triallylamine (TAA), triallylamine (TAA) derivatives, and mixtures thereof. More advantageously, the crosslinker is a nitrogen-based unsaturated crosslinker, such as an unsaturated tertiary amine crosslinker, even more advantageously selected from the group consisting of triallylamine (TAA), triallylamine (TAA) derivatives, and mixture thereof. Triallylamine (TAA), triallyl ammonium mesylate based-crosslinker (TAAH⁺MSA⁻), and mixture thereof, are particularly preferred crosslinkers.

In this embodiment, the polymerizing step (ii) via UV-polymerization can be carried out in presence of a photoinitiator, preferably selected from the group consisting of a-hydroxyketones, benzoins, benzoin ethers, acetophenones, a-hydroxyacetophenones, benzil, benzil ketals, anthraquinones, phosphine oxides, acylphosphine oxides, phenylglyoxylates, α-aminoketones, benzophenones, thioxanthones, xanthones, acridine derivatives, phenazene derivatives, quinoxaline derivatives, triazine compounds, benzoyl formates, aromatic oximes, metallocenes, acylsilyl or acylgermanyl compounds, camphoquinones, and mixtures thereof, and more preferably a-hydroxyketones such as 2-hydroxy-2-methyl-1-phenyl-propan-1-one (Darocur^{®} 1173).

The method for preparing a protic poly(ionic liquid) according to the invention may further comprise a dialysis step to remove unreacted monomers.

According to another aspect, the present invention aims at a polymerized ionic liquid membrane made from a protic ionic liquid or a protic poly(ionic liquid) according to the invention. In a preferred embodiment, said polymerized ionic liquid membrane is a proton-exchange membrane.

In another aspect, the present invention relates to the use of a protic ionic liquid or a protic poly(ionic liquid) as defined in the invention, for the production of a polymerized ionic liquid membrane, and in particular a proton-exchange membrane.

The invention also aims at a fuel cell comprising a polymerized ionic liquid membrane according to the invention.

Finally, the invention concerns a vehicle, an electronic device and a stationary power generating device, comprising a fuel cell according to the invention, and preferably a car, bike, scooter or drone comprising a fuel cell according to the invention.

Any combination of the above described elements in all possible variations thereof is encompassed by the invention unless otherwise indicated herein or otherwise clearly contradicted by context. Thus, all features and embodiments described herein in particular as applicable, advantageous or preferred in the context of the invention are to be construed as being applicable in combination with one another, in preferred embodiments of the invention.

### Examples

### Synthesis of protic ionic liquids (PILs):

Diallylmethylamine (DAMA) was purchased from Acros Organics, 98%, and triallylamine (TAA) was purchased from Sigma-Aldrich, 99%.

Acids include phosphoric acid H₃PO₄ (Sigma-Aldrich, 85% in water, 99.99%), sulfuric acid H₂SO₄ (Sigma-Aldrich, 95-98%), hydrochloric acid HCI (Sigma-Aldrich, 37% in water), methanesulfonic acid MSA (Sigma-Aldrich, 99.99%), triflate acid HTf (Sigma-Aldrich, 98%), and bis(trifluoromethanesulfonyl)imide acid HTFSI (Sigma-Aldrich, 95%).

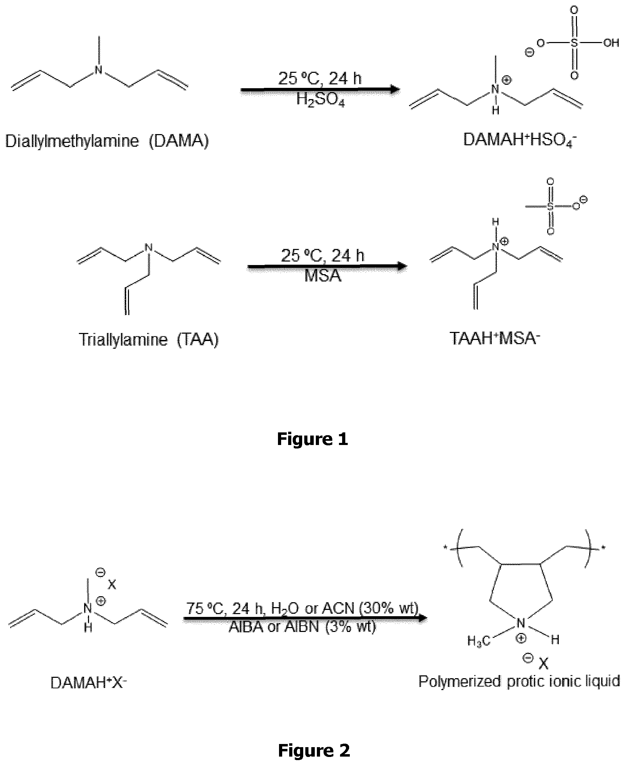

Protic ionic liquids, DAMAH⁺HSO₄⁻, DAMAH⁺MSA⁻, DAMAH⁺Tf⁻, and DAMAH⁺TFSI⁻, were synthesized by reacting diallylmethylamine (DAMA) with the corresponding acid. To this end, each acid was added dropwise slowly to DAMA under agitation in a ratio 1:1 mol and left during 24 hours to form the protic ionic liquids. As shown on **Figure 1****,** one H⁺ is exchanged from the acid to the monomer DAMA, creating the protic ionic liquid. As shown on **Figure 1****,** a protic ionic liquid based on TAA, TAAH⁺MSA⁻, was also synthesized for its use as a crosslinker. All the synthesized compounds were characterized to confirm their structure and properties.

### Thermal polymerization of protic ionic liquids:

Polymerized ionic liquid membranes were prepared by thermal polymerization using 2,2'-azobis(2-methylpropionamide)dihydrochloride (AIBA) initiator or N,N'-azobisisobutyronitrile (AIBN) (depending on the hydrophilicity of the protic ionic liquid). DAMAH⁺H₂PO₄⁻, DAMAH⁺HSO₄⁻, DAMAH⁺Cl⁻, DAMAH⁺MSA⁻ and DAMAH⁺Tf⁻ were desoxygenated for 30 minutes in water (30% wt) and stirred at 75 °C together with AIBA (3 wt% with respect to the protic ionic liquid monomers) in water for 24 hours. In the case of DAMAH⁺TFSI⁻, the polymerization procedure was the same as the other protic ionic liquids but instead of water, acetonitrile (ACN) was employed. A dialysis step was then carried out to purify the obtained polymers and ensure removal of unreacted protic ionic liquid. Each liquid mixture was then poured into a silicon mold and let dry for 24 hours at 70 °C to obtain a proper membrane.

Thermal polymerization pathway of the protic ionic liquid is shown on **Figure 2****,** where X represents an anion.

For DAMAH⁺MSA⁻ protic ionic liquid, the conversion rate obtained was ~90-96% after ¹H-NMR characterization of the resulting polymer. Peaks associated with remaining monomer disappeared after dialysis step.

### UV-photopolymerization of protic ionic liquids:

Polymerized ionic liquid membranes were also prepared via UV-polymerization using either triallylamine (TAA) as crosslinker or a protic ionic liquid derived from TAA or TAAH⁺MSA⁻. In some cases, copolymers were synthesized by mixing two different protic ionic liquids (for example DAMAH⁺MSA⁻₅₀-Tf₅₀⁻ which results from the mixture of 50 wt% of DAMAH⁺MSA⁻and 50 wt% of DAMAH⁺Tf⁻). One or two selected protic ionic liquids were mixed with the crosslinker (5 or 10 wt% with respect to the protic ionic liquid monomers) and Darocur^{®} 1173 photoinitiator (5 wt% with respect to the protic ionic liquid monomers), avoiding the use of extra solvent since the pre-polymeric mixture is liquid. The resulting mixture was then poured into a silicon mold and exposed to UV light for photopolymerization: samples were irradiated for 60 seconds using a UVC-5 (DYMAX) UV Curing Conveyor System with an intensity up to 400 mW.cm⁻², 30 mm lamp-to-belt distance, and belt speed at 7 m.min⁻¹. An additional cleaning step was carried out to remove unreacted protic ionic liquid, by leaving the resulting photopolymerized membranes in water for two hours. Purity of the final membranes was checked by FTIR, and was superior to 99% for all membranes.

### Evaluation of thermal stability:

Thermal stability of the protic ionic liquids and polymerized ionic liquid membranes were carried out using thermogravimetric analysis (TGA) between room temperature and 600 °C.

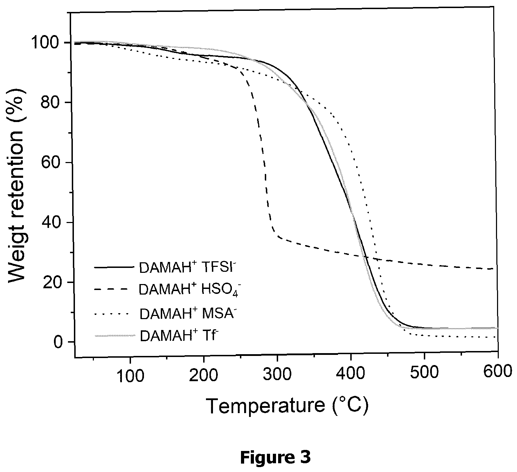

The TGA curves of the prepared protic ionic liquids (PILs) are represented in **Figure 3****.** As observed, all protic ionic liquids present less than 4 wt% weight loss at 120 °C.

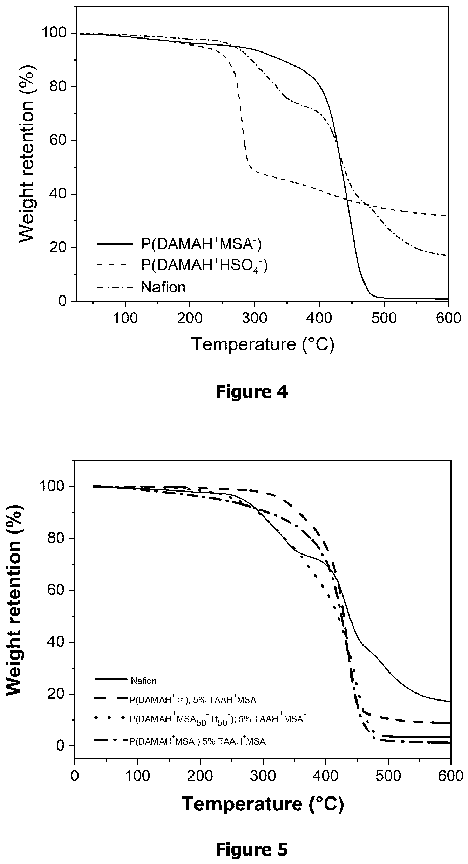

The TGA curves for prepared UV- and thermally-polymerized ionic liquid membranes are represented in **Figures 4** and **5****.** The polymerized ionic liquid membranes show good thermal stability up to 250 °C, with a weight loss lower than 4 wt%.

### Electrochemical characterization:

### Ionic conductivity measurements by Electrochemical Impedance Spectroscopy (EIS):

The ionic conductivity of the protic ionic liquids was determined at different temperatures by Electrochemical Impedance Spectroscopy (EIS), in order to measure the ionic conductivity of samples in a non-destructive manner. Ionic conductivity was higher than 5 mS.cm⁻¹ at 100 °C when measured for all protic ionic liquids.

The measurement of the conductivity of polymerized ionic liquid membranes was carried out with an Autolab PGSTAT302N potentiostat galvanostat (Metrohm AG) with a temperature controller (Microcell HC station). The temperatures were set between 25 and 85 °C. Electrolytes were sandwiched between two stainless steels electrodes. The membranes were left for 48 hours at 60 °C before the measurement. EIS was monitored using a frequency range of 1 Hz to 10 kHz with an amplitude of 10 mV.

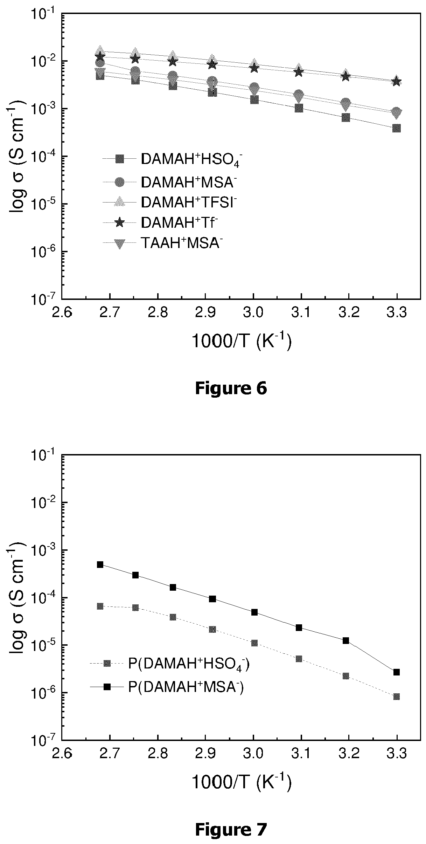

The ionic conductivity of the prepared protic ionic liquids is shown in **Figure 6****.** All sulfonic based protic ionic liquids present a conductivity between 5 and 16 mS.cm⁻¹ at 100°C.

The ionic conductivity of the prepared polymerized ionic liquid membranes through thermal or UV polymerization using TAA or TAAH⁺MSA⁻crosslinker is shown in **Figures 7-9****:**
- **Figure 7** shows the ionic conductivity of thermally polymerized DAMAH⁺MSA⁻ and DAMAH⁺HSO₄⁻ protic ionic liquids (PILs),

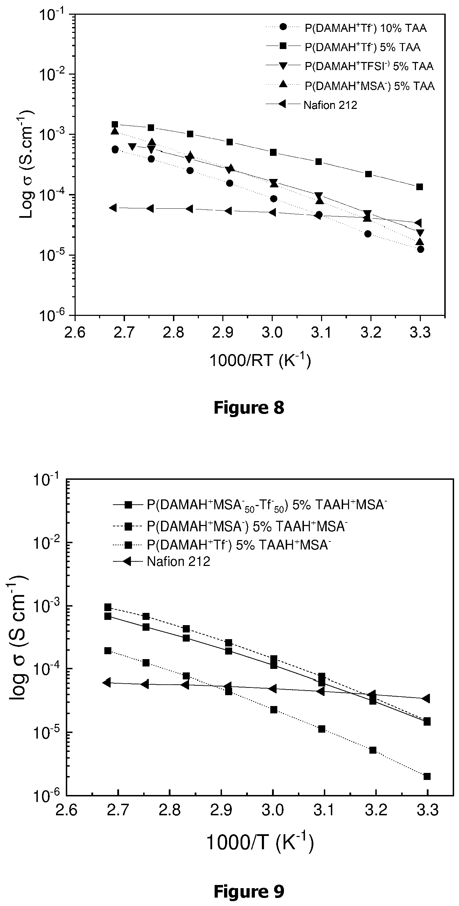

- **Figure 8** shows the ionic conductivity of PILS polymers crosslinked with TAA, and
- **Figure 9** shows the ionic conductivity of PILs polymers crosslinked with TAAH⁺MSA⁻.

Best ionic conductivities were shown for the crosslinked membranes, at 100 °C and dry conditions:
P(DAMAH⁺Tf⁻) 10% TAA: 1.5 mS cm⁻¹,
P(DAMAH⁺MSA⁻) 5% TAA: 1.1 mS cm⁻¹,
P(DAMAH⁺TFSI⁻) 5% TAA: 0.7 mS cm⁻¹,
P(DAMAH⁺Tf⁻) 5% TAA: 0.6 mS cm⁻¹,
P(DAMAH⁺MSA⁻) 5% TAAH⁺MSA⁻: 0.95 mS cm⁻¹,
P(DAMAH⁺MSA⁻₅₀-Tf₅₀⁻) 5% TAAH⁺MSA⁻: 0.7 mS cm⁻¹,
P(DAMAH⁺Tf⁻) 5% TAAH⁺MSA⁻: 0.2 mS cm⁻¹.

These values are higher than for perfluorinated membranes commercially used in fuel cell vehicles. Indeed, in similar conditions, the conductivity of membrane reference Nafion^{®} 212 was 0.06 mS.cm⁻¹ at 100 °C.

## Claims

1. A protic ionic liquid comprising:
(a) a cationic monomer unit represented by formula (1): 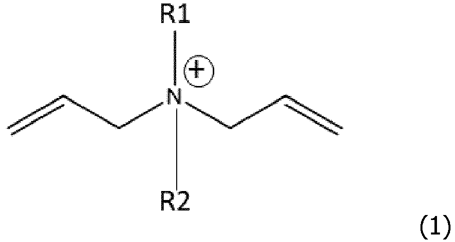 wherein:
N⁺ is a nitrogen atom constituting a quaternary ammonium cation,
R¹ is a hydrogen atom,
R² is a (C1-C20)akyl or a (C4-C20)aryl group, optionally substituted, and
(b) an anion.

2. A protic poly(ionic liquid) comprising:
(a') a polymer represented by repeating units of formula (2): 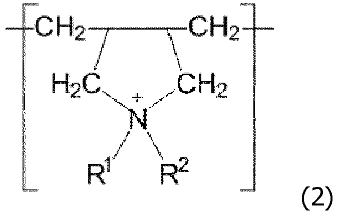 wherein:
N⁺ is a nitrogen atom constituting a quaternary ammonium cation,
R¹ is a hydrogen atom,
R² is a (C1-C20)akyl or a (C4-C20)aryl group, optionally substituted, and
(b') anions.

3. A protic ionic liquid according to claim 1 or a protic poly(ionic liquid) according to claim 2, wherein R² represents a methyl, ethyl, propyl, or butyl group, and preferably a methyl group.

4. A protic ionic liquid according to claim 1 or 3 or a protic poly(ionic liquid) according to claim 2 or 3, wherein the anions (b) or (b') are selected from the group consisting of HSO₄⁻, Cl⁻, MSA⁻, Tf, TFSI⁻, and mixtures thereof, and preferably MSA⁻, Tf⁻, TFSI⁻, and mixtures thereof.

5. A method for preparing a protic poly(ionic liquid) according to claim 2 to 4 comprising the steps of:
(i) reacting a diallyl (C1-C20)alkyl amine or a diallyl (C4-C20)aryl amine, optionally substituted, and preferably diallylmethylamine (DAMA), with at least one acid, and
(ii) polymerizing the protic ionic liquid obtained in step (i), either via thermal polymerization, or via UV-polymerization in presence of a crosslinker.

6. A method according to claim 5, wherein the acid of step (i) is selected from the group consisting of phosphoric acid (H₃PO₄), sulfuric acid (H₂SO₄), hydrochloric acid (HCI), hydroxymethanesulfonic acid (HMSA), triflate acid (HTf), bis(trifluoromethanesulfonyl)imide acid (HTFSI), trifluoroacetic acid, propanoic acid, phosphoric acid, phosphorous acid, sulfuric acid, hydrochloric acid, nitric acid, acetic acid, benzoic acid, salicylic acid, sulfamic acid, benzenesulfonic acid, perfluorobenzenesulfonic acid, fluorobenzenesulfonic acid, trifluorobenzenesulfonic acid, perfluoroctanesulfonic acid, perfluorobutanesulfonic acid, 4-toluenesulfonic acid, 3-nitrobenzenesulfonic acid, 4-aminobenzenesulfonic acid, 2-sulfobenzoic acid, 5-sulfosalicylic acid, 2,4,6-trinitrobenzenesulfonic acid, and mixtures thereof, preferably phosphoric acid (H₃PO₄), sulfuric acid (H₂SO₄), hydrochloric acid (HCI), hydroxymethanesulfonic acid (HMSA), triflate acid (HTf), bis(trifluoromethanesulfonyl)imide acid (HTFSI), and mixtures thereof, and more preferably hydroxymethanesulfonic acid (HMSA), triflate acid (HTf), bis(trifluoromethanesulfonyl)imide acid (HTFSI), and mixtures thereof, wherein the acid of step (i) is advantageously a mixture of at least two different acids.

7. A method according to claim 5 or 6, wherein the polymerizing step (ii) is carried out via thermal polymerization, preferably in presence of an initiator, and more preferably in presence of an initiator selected from the group consisting of butyl 4,4-di(tert-butylperoxy)valerate, tert-butylperoxybenzoate, 2,2-di(tert-butylperoxy)butane, tert-amyl peroxybenzoate, tert-butylperoxyacetate, tert-butylperoxy-(2-ethylhexyl)carbonate, tert-butylperoxy isopropyl carbonate, tert-butyl peroxy-3,5,5-trimethyl-hexanoate, 1,1-di(tert-butylperoxy)cyclo-hexane, tert-amyl peroxyacetate, tert-amylperoxy-(2-ethylhexyl)carbonate, 1,1-di(tert-butylperoxy)-3,5,5-trimethylcyclohexane, 1,1-di(tert-amylperoxy)cyclohexane, tert-butyl-monoperoxymaleate, tert-butyl peroxyisobutyrate, tert-butyl peroxydiethylacetate, tert-butyl peroxy-2-ethylhexanoate, dibenzoyl peroxide, tert-amyl peroxy-2-ethylhexanoate, di(4-methylbenzoyl)peroxide, 1,1,3,3,-tetramethylbutyl peroxy-2-ethylhexanoate, ammonium peroxodisulfate, 2,5-dimethyl-2,5-di(2-ethylhexanoylperoxy)hexane, didecanoyl peroxide, dilauroyl peroxide, di(3,5,5-trimethylhexanoyl) peroxide, tert-amyl peroxypivalate, tert-butylperoxyheptanoate, 1,1,3,3-tetramethylbutyl peroxypivalate, tert-butyl peroxypivalate, dicetyl peroxydicarbonate, dimyristyl peroxydicarbonate, di(2-ethylhexyl) peroxydicarbonate, diisopropyl peroxydicarbonate, tert-butyl peroxyneodecanoate, di-sec-butyl peroxydicarbonate, tert-amyl peroxyneodecaniate, cumyl peroxyneoheptanoate, di(3-methoxybutyl) peroxydicarbonate, 1,1,3,3-tetramethylbutyl peroxyneodecanoate, cumyl peroxyneodecanoate, diisobutyryl peroxide, 2,2'-azobis(isobutyramidine) hydrochloride (AIBA), N,N'-azobisisobutyronitrile (AIBN), 2,2'-azobisisoheptonitrile (ABVN), 2,2'-azobis-2-methylbutyronitrile (AMBN), 1,1'-azobis(cyclohexane-1-carbonitrile) (ACCN), 1-[(cyano-1-methylethyl)azo]formamide (CABN), dimethyl 2,2'-azobis(2-methylpropionate) (AIBME), 2,2'-azobis[2-(2-imidazolin-2-yl)propane] dihydrochloride (AIBI), 1,1-azobis(hexahydrobenzonitrile), 2,2'-azobis(isobutyronitrile), and mixtures thereof.

8. A method according to claim 7, wherein the polymerizing step (ii) is carried out at a temperature ranging from 20 to 140 °C, advantageously from 40 to 100 °C, and preferably for 8 to 36 hours, more preferably for 12 to 30 hours, and even more preferably for 24 hours.

9. A method according to any of claims 5 to 8, wherein the polymerizing step (ii) is carried out via UV-polymerization in presence of a crosslinker, and preferably in presence of a photoinitiator, advantageously selected from the group consisting of ethylene glycol dimethacrylate, ethylene glycol acrylate, poly(ethylene glycol) di(meth)acrylate, divinylbenzene, 1,3-diisopropenyl benzene, N,O-bismethacryloyl ethanolamine, N,N-1,4-phenylenediacrylamide, 3,5-bis(acryloamido)benzoic acid, trimethyl propane trimethacrylate, pentaerythritol triacrylate, N,N-methylenediacrylamide, 2,6-bisacryloylamidopyperidine, 1,4-diacryloyl piperazine, triallylamine (TAA) and their derivatives, and mixtures thereof.

10. A method according to claim 9, wherein the crosslinker is a nitrogen-based unsaturated crosslinker, preferably an unsaturated tertiary amine crosslinker, more preferably selected from the group consisting of triallylamine (TAA), triallylamine (TAA) derivatives, and mixture thereof, and even more preferably selected from triallylamine (TAA), triallyl ammonium mesylate based-crosslinker (TAAH⁺MSA⁻), and mixture thereof.

11. A method according to claim 9 or 10, wherein the polymerizing step (ii) is carried out by exposure to UV at an intensity ranging from 100 to 700 mW.cm⁻², preferably 200 to 600 mW.cm⁻², and more preferably 300 to 500 mW.cm⁻², and wherein the exposure to UV is advantageously carried out in less than 5 minutes, more advantageously from 10 seconds to 3 minutes, and even more advantageously from 30 seconds to 2 minutes.

12. A polymerized ionic liquid membrane made from a protic ionic liquid or a protic poly(ionic liquid) as defined in any of claims 1 to 4.

13. A polymerized ionic liquid membrane according to claim 12, which is a proton-exchange membrane.

14. Use of a protic ionic liquid or protic poly(ionic liquid) according to claims 1 to 4 for the production of a polymerized ionic liquid membrane, and in particular for the production of a proton-exchange membrane.

15. A fuel cell comprising a polymerized ionic liquid membrane as defined in claim 12 or 13.

16. A vehicle, an electronic device or a stationary power generating device, comprising a fuel cell according to claim 15, and preferably a car, bike, scooter or drone comprising a fuel cell according to claim 15.
